# EUROPEAN PATENT SPECIFICATION

(11) **EP 3 290 573 B1**
(45) Date of publication and mention of the grant of the patent: **19.02.2020**
(21) Application number: 16785838.0
(22) Date of filing: 15.04.2016
(51) Int. Cl.: D06F 39/10, C02F 1/52, D06F 39/02, D06F 35/00

(54) **WASHING MACHINE AND CONTROL METHOD**
WASCHMASCHINE UND STEUERUNGSVERFAHREN
MACHINE À LAVER ET PROCÉDÉ DE COMMANDE

(30) Priority: 30.04.2015 CN 201510217430
(43) Date of publication of application: 07.03.2018
(73) Proprietor: Qingdao Haier Washing Machine Co., Ltd., Shandong 266101 (CN)
(72) Inventor: XU, Sheng, Qingdao Shandong 266101 (CN); ZHAO, Zhiqiang, Qingdao Shandong 266101 (CN); PENG, Xiuwen, Qingdao Shandong 266101 (CN); DENG, Jinzhu, Qingdao Shandong 266101 (CN)
(74) Representative: Beck & Rössig European Patent Attorneys
(86) International application number: PCT/CN2016/079401
(87) International publication number: WO 2016/173407

(56) References cited:
- WO-A1-2015/021722
- CN-U- 202 113 651
- CN-U- 204 058 037
- JP-A- 2001 054 700
- JP-A- 2001 113 090
- JP-A- 2001 149 691
- US-A1- 2013 127 263

## Description

The present invention relates to a washing machine comprising the features of the preamble portion of claim 1.

A washing machine of this type is e.g. known from WO 2015/021722 A1.

With the improvement of people's living standards, washing machine has become one of major household appliances in people's daily life. A washing process of the washing machine mainly comprises several stages of washing, rinsing and dewatering. In the washing stage, water and a detergent are fed into the washing machine to wash clothes; and in the rinsing stage, in order to rinse out dirt and the residual detergent, more water is needed or more times of rinsing needs to be performed to rinse the clothes, so that a large amount of water is consumed. Even if a water-saving drum washing machine is used, the clothes also need to be rinsed at least twice to get cleaned, and at least 30L or above of running water needs to be consumed in the process. Sometimes, dirt on the clothes is less or the use amount of the detergent is less, the clothes can be cleaned after being rinsed twice. But due to user selects three times of rinsing, waste of water will also be caused. For example, a 6Kg full-automatic washing machine generally consumes about 100 litres of water for rinsing twice. How to clean clothes thoroughly and save water and electricity at the same time has been one of the focuses of consumer attention.

So far, there is no water purification and cyclic utilization device to mate with a domestic washing machine. Even if for a washing machine with the water-saving function, a water storage tank is usually mounted on the side of the washing machine, and water is fed and drained by using a water pump. Generally, 3 times of rinsing can be performed after one-time water feeding, and the water-saving function is realized. However, the water after washing cannot be preserved, and the washing machine is complex and huge in structure, and is not conducive to transport or recycle and the like. Due to the limitations in the respects of size, structure, flexibility and the like, the original functions of the washing machine and the function of the water-saving tank cannot be fully exerted. Based on a conventional clothes washing mode, in order to save water resources better, many manufacturers spend a lot in research and development to produce the washing machine with the water purification and cyclic utilization device and with the water-saving function.

At the same time, as the flocculation technology has gradually matured, the flocculation technology is gradually applied and popularized in the industrial field. A water-saving washing machine manufactured by adopting a flocculation principle becomes a research and development hotspot of various washing machine manufacturers. However, when flocculation treatment is performed on washing water or rinsing water with a conventional flocculation container, dirt in the water can react with a flocculant and generate flocculates. Because high-molecular polymers are added to the flocculant, the adhesion of the flocculates is very high, and the flocculates are easy to attach to the inner wall of the flocculation container. Partial flocculates can be retained in the flocculation container after flocculation reaction, a large number of bacteria are bred and cause secondary pollution to washing clothes.

In order to solve the above problem, generally, the wall of the flocculation container is flushed by water flow, and the wall of the flocculation container is flushed and brushed by the water flow generated by the stirring mechanism in the flocculation container to realize the purpose of cleaning the flocculation container. However, the flocculates are extremely easy to scatter by the water flow, so the intensity of the water flow cannot be too high, and the flocculates cannot be removed with the flushing and brushing intensity of the water flow.

At the same time, if intake water flow is used to flush and brush the flocculation container, the intake water flow needs to cover the whole wall of the flocculation container, so that the water intake structure is complex. And in the flushing process, a hidden danger of thread blocking can exist at a water inlet spray nozzle of the flocculation container, obstructed water intake is easy to cause, and the normal operation of flocculation reaction is further affected.

From WO 2015/021722 A1 it is known to arrange a stirring mechanism in a flocculation container.

From US 2013/0127263 A1 discloses the use of washing balls within a washing machine for frictionally removing filth. The washing balls have a two-layer structure including a non-deformable outer layer made of thermoplastic resin, thermosetting resin or ceramic material. The outer layer is provided with soft washing projections.

The object of the present invention is to further improve the efficiency of cleaning flocculates attached to the walls in a washing machine.

This object is achieved by the subject matter of claim 1. Advantageous embodiments are indicated in further claims.

The cleaning hairy ball applicable to the washing machine serves the purpose of self-cleaning the flocculation container and/or the space between the inner barrel and the outer barrel.

Preferably, cleaning hairs can be integrally formed to form the cleaning hairy ball; or one ends of the cleaning hairs can be adhered and fixed together to form the cleaning hairy ball; or the middles of the cleaning hairs can also be fixed with ribbons or bundles to form the cleaning hairy ball. Further, preferably, the outer contour surfaces of the cleaning hairy ball can be spherical, square, elliptical, cylindrical, tetrahedral or in other irregular bulk shapes.

In some embodiment the flocculation container is provided at least one discharge outlet for allowing water in the flocculation container to flow out; a blocking structure is arranged at the discharge outlet, and/or a diameter of the discharge outlet is less than a diameter of the cleaning hairy ball, so as to prevent the cleaning hairy ball from flowing out of the flocculation container along with water. Preferably, the discharge outlet comprises a sewage outlet formed in the bottom of the flocculation container, and a water return opening allowing clean water to reflow into the outer barrel of the washing machine.

In some embodiment the washing machine further comprises an outer barrel and an inner barrel mounted in the outer barrel, and at least one cleaning hairy ball is arranged in a space between the inner barrel and the outer barrel.

In some embodiment a water outlet for feeding flocculation water to the flocculation container is formed in the lower part of the outer barrel, and the blocking structure is arranged at the water outlet, and/or a diameter of the water outlet is less than a diameter of the cleaning hairy ball, so as to prevent the cleaning hairy balls from flowing out of the outer barrel along with water.

In some embodiment a plurality of cleaning hairy balls with different sizes are respectively arranged in the flocculation container and/or outer barrel, and the densities of all the cleaning hairy balls are less than that of water. Preferably, densities of the cleaning hairy ball are 0.8 to 0.9999 times of that of water; and cleaning hairs are made from rubber strip.

In some embodiment a certain space is formed between every two adjacent cleaning hairs arranged on the cleaning hairy ball, and the cleaning hairs are made from a flexible material which can be deformed and can recover from the deformation.

In some embodiment the lengths of the cleaning hairs arranged on the cleaning hairy balls are equal, so that the outer contours of the cleaning hairy ball is spherical.

In some embodiment at least two kinds of cleaning hairs with different lengths are arranged on the cleaning hairy ball in a staggered manner. Preferably, a diameter D of one kind of cleaning hairy balls is smaller than the space between the inner barrel and the outer barrel, and a diameter D of another kind of cleaning hairy balls is larger than the space between the inner barrel and the outer drum.

In some embodiment an accommodating cavity allowing the cleaning hairy balls to be accommodated is formed in the flocculation container, a filtering screen for preventing the cleaning hairy ball from flowing out is arranged at the bottom of the accommodating cavity, and a diameter of the filtering screen is less than a diameter of the cleaning hairy ball.

The present invention further provide a control method of the washing machine as indicated in claim 9 for cleaning the flocculation container and/or the space between the inner barrel and the outer barrel by using the cleaning hairy ball.

In some embodiment the inner barrel of the washing machine starts rotating to stir the washing water in the outer barrel, and the cleaning hairy ball moves between the inner barrel and the outer barrel along with the washing water flow, so that dirt attached between the inner barrel and the outer barrel are removed.

In some embodiment water supply to the flocculation container can be rinsing water in the outer barrel of the washing machine, or clean water reflowing into the flocculation container from outside.

Compared with the prior art, the washing machine disclosed by the present invention has the following advantages:
1. The cleaning hairy ball moving with the water flow can remove the flocculates that attached to the inner wall of the flocculation container and difficult to clean by friction, so that the purpose of cleaning the flocculation container is realized;
2. Dirt attached to the outer wall of the inner barrel and the inner wall of the outer barrel can be removed through friction by the cleaning hairy ball moving along with the washing water flow, so that the purpose of self-cleaning the inner barrel and the outer barrel of the washing machine is realized;
3. The cleaning hairy ball is formed by multistrip cleaning hairs made from a flexible material which can be deformed and can recover from the deformation and arranged in a staggered manner, so that the coverage area of the cleaning hairy balls is increased, and the cleaning effect is obviously improved. At the same time, the noise generated by friction between the cleaning hairy balls and the walls of the drums is reduced; 4. The discharge outlet of the flocculation container and/or the outer barrel is provided with the blocking structure to prevent the cleaning hairy balls from flowing out.

Besides, the washing machine disclosed by the present invention has simple structure and significant effect, thereby being suitable for popularization.

The specific embodiments of the present invention are described in details below with reference to the accompanying drawings.

In the drawings:
Fig. 1 is a schematic diagram of the structure in an embodiment of the present invention;
Fig. 2 is a schematic diagram of the structure in another embodiment of the present invention;
Fig. 3 is a schematic diagram of the structure of a circulating water treatment device in the embodiment of the present invention;
Fig. 4 is a schematic diagram of the structure of the cleaning hairy ball in the embodiment of the present invention.

Reference Signs: 1-flocculation container; 2-first water pump; 3-second water pump; 4-drain valve; 5-stirring blade; 6-drive motor; 7-spray nozzle; 8-belt pulley; 9-cleaning hairy ball; 10-outer barrel; 11-inner barrel; 12-impeller; 15-cleaning hair; 17-filtering unit; 18-filtering screen; 19-grid structure.

The present invention is described in details below with reference to the embodiments.

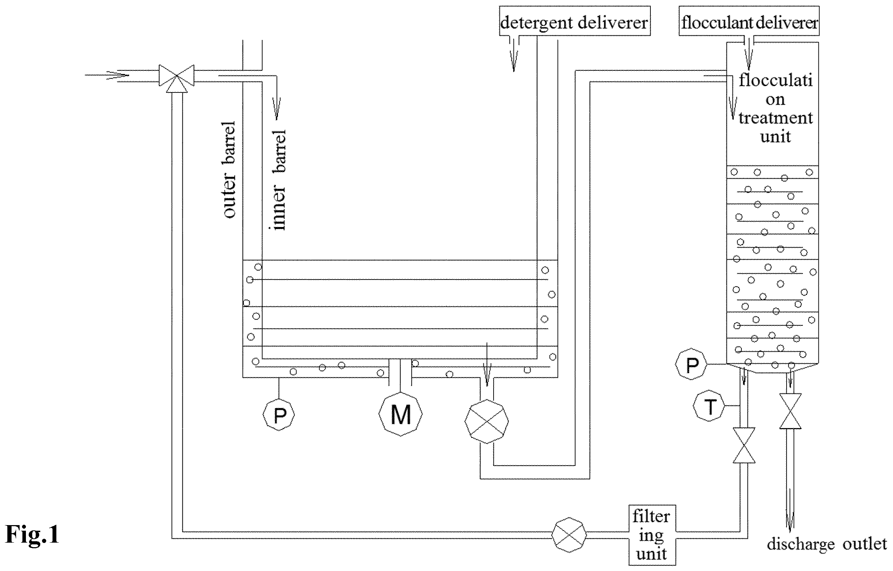

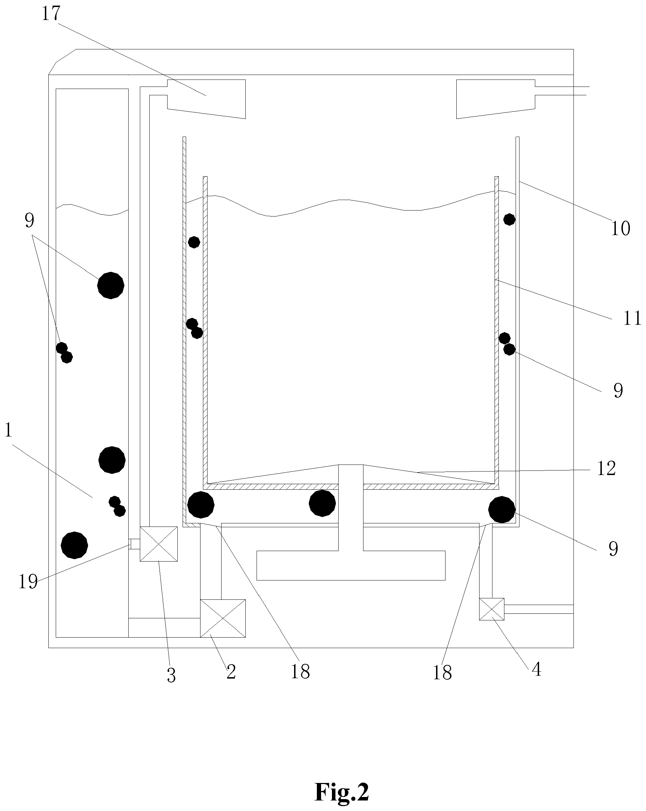

As shown in Fig. 1 and Fig. 2, a washing machine of the embodiment of the present invention is internally provided with a conventional washing machine structure and is provided with a circulating water treatment device. The washing machine structure comprises an outer barrel, an inner drum 11 arranged in the outer barrel 10, a door body, a control panel, a water inlet system and a washing motor. And the intake system comprises an intake structure and a detergent delivery device. The outer barrel 10 is a containing structure for containing washing water, and the inner drum 11 arranged in the outer barrel 10 is a laundry structure. And preferably, as shown in Fig. 2, the washing machine structure can further comprise an impeller 12 arranged in the inner drum 11. The outer barrel 10 is connected with the intake structure, so as to feed the washing water to the washing machine.

The circulating water treatment device in this embodiment of the present invention at least comprises a flocculation treatment unit; the flocculation treatment unit comprises a flocculation container 1 communicated with the outer barrel 10 and a flocculant deliverer for delivering a flocculant into the flocculation container 1, and water is drained from the outer barrel 10 to the flocculation container 1 for flocculation treatment.

As shown in Fig. 1 to Fig. 3, the flocculation container 1 is provided with a water inlet, a water return opening and a sewage outlet. The water outlet of the outer barrel communicates with the water inlet of the flocculation container 1 through a conduit provided with a first water pump 2, and the water return opening of the flocculation container 1 communicates with the water inlet of the outer barrel 10 through a conduit provided with a second water pump 3, so that a controllable circulation loop of the washing water between the outer barrel 10 and the flocculation container 1 is formed. The sewage outlet of the flocculation container 1 communicates with the outside of the washing machine through a conduit provided with a drain valve 4, so that sewage and flocculates after washing are drained out. As shown in Fig. 2, the sewage outlet can also be formed in the bottom of the outer barrel 10, so as to the drain water can flow out of the washing machine from the outer barrel 10 through the sewage outlet and the drain valve 4.

Preferably, the circulating water treatment device can further comprise a filtering unit 17; the filtering unit 17 is used for performing filtration treatment on the flocculation treatment water that has been treated by the flocculation treatment unit, so that the flocculates and clean water are separated. Besides, Flocculates can be separated from clean water without using the filtering device. For example, a water level sensor is arranged in the flocculation container to always keep the water level in the flocculation container at a certain height, so that the flocculates floating at the water level of the flocculation container are always retained in the flocculation container, and the purpose of removing the flocculates in the flocculation water is realized.

However, no matter which separation manner is adopted, flocculates with high adhesion will be retained on the wall of the flocculation container; and if the flocculates are attached to the side wall of flocculation container for a long term, a large number of bacteria can be bred in the flocculation container.

Therefore, in order to solve the above problem, the present invention particularly proposes that at least one cleaning hairy ball 9 is arranged in the flocculation container 1, so that the cleaning hairy ball 9 moves along with the water flow in the flocculation container to clean the wall of the flocculation container through friction, and the purpose of thorough cleaning of flocculates adhered to the inner wall of the flocculation container is realized.

### Embodiment I

As shown in Fig. 1 to Fig. 4, in this embodiment, a plurality of cleaning hairs balls 9 are arranged in the flocculation container 1for removing the flocculates attached to the flocculation container.

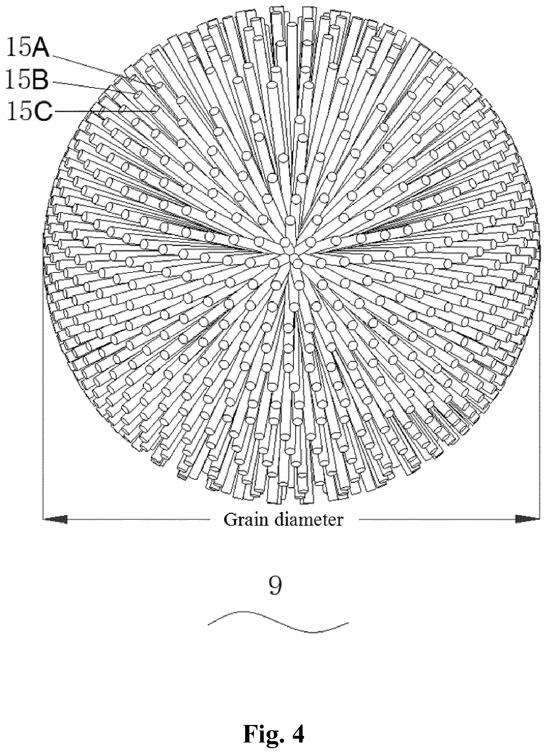

As shown in Fig. 4, in this embodiment, each cleaning hairy ball 9 is provided with a plurality of strip-shaped cleaning hairs 15; one end of cleaning hairs 15 are fixed to form a center of the cleaning hairy ball 9, and another ends of cleaning hairs form an outer contour surface of the cleaning hairy ball 9 by extending cleaning hairs in a divergence way. In this embodiment, the cleaning hairs 15 can be integrally formed to form the cleaning hairy ball 9; or one ends of the cleaning hairs 15 can be adhered and fixed together to form the cleaning hairy ball 9.

In this embodiment, the outer contour surfaces of cleaning hairy balls 9 can be spherical, square, elliptical, cylindrical, tetrahedral or other irregular bulk shapes.

In this embodiment, a certain space is formed between every two adjacent cleaning hairs 15 arranged on the cleaning hairy ball 9, and the cleaning hairs 15 are made from a flexible material which can be deformed and recover from the deformation. Preferably, the cleaning hairs 15 are made from rubber strips. By setting the cleaning hairs to be made from a flexible material which can be deformed and recover from the deformation, the contact area between the cleaning hairy balls and the wall of the flocculation container is increased; besides, the noise generated by friction between the cleaning hairy balls and the wall of the flocculation container is reduced.

As shown in Fig. 4, in this embodiment, the lengths of the cleaning hairs 15A, 15B and 15C arranged on a cleaning hairy ball 9 are equal, so that the outer contour of the cleaning hairy ball 9 is spherical. A diameter D of the cleaning hairy ball 9 is the diameter of the spherical outer contour.

Also, in this embodiment, at least two kinds of cleaning hairs 15 with different lengths are arranged on the cleaning hairy ball 9 in a staggered manner, so as to clean cracks with a narrow space. Preferably, the cleaning hairs 15A, 15B and 15C of three specifications are sequentially arranged on the cleaning hairy ball 9 in a staggered manner. Further, preferably, the lengths of the cleaning hairs 15A, 15B and 15C decrease sequentially, so that an irregular outer contour surface of the cleaning hairy ball 9 is formed, and the purpose of improving the friction cleaning capability is realized.

In this embodiment, a plurality of cleaning hairy balls with different sizes are arranged in the flocculation container 1, and the densities of all the cleaning hairy balls 9 are less than that of water. Preferably, the densities of the cleaning hairy balls 9 are 0.8 to 0.9999 times of that of water. Therefore, the cleaning hairy balls 9 can move to various positions in the flocculation container 1 along with the water flow to clean various parts of the flocculation container. Besides, the conditions that the cleaning hairy balls 9 always remain in the water level position of the flocculation container 1 due to too light weight, or the cleaning hairy balls always remain at the bottom of the flocculation container 1 due to too heavy weight, can be avoided.

### Embodiment II

In this embodiment, a control method for the washing machine to clean the flocculation container is described. The control method comprises: water is fed to the flocculation container, and a stirring mechanism is started, so that the cleaning hairy balls move along with the water flow, so as to clean the flocculates attached to the flocculation container.

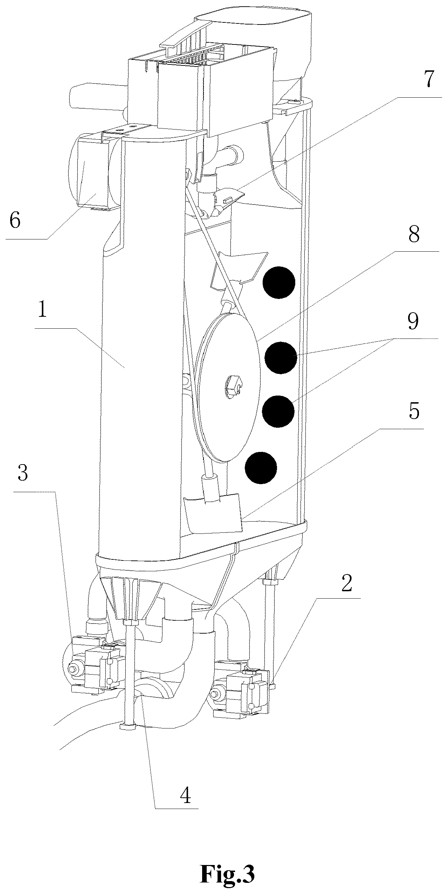

In order to realize the method, in this embodiment, the flocculation container 1 is provided with the stirring device for stirring water in the flocculation container 1. The stirring device can adopt any structure in the prior art and is a device capable of stirring water in the flocculation container. For example, as shown in Fig. 3, the stirring mechanism used for the flocculation container comprises a rotating shaft horizontally arranged in the flocculation container 1, a belt pulley 8 vertically rotating around the rotating shaft is mounted on the rotating shaft, and a plurality of stirring rods are arranged on the belt pulley 8 in a radial extending manner. Stirring blades 5 are respectively arranged on the stirring rods. A drive motor 6 is also arranged at the top of the flocculation container 1, and the belt pulley 8 is driven to rotate by the drive motor through a belt. Therefore, water in the flocculation container is stirred, and flocculates are scattered by the water flow and are mixed with the water.

In this embodiment, the water fed to the flocculation container can be washing water or rinsing water of the washing machine, or clean water fed from the outside. Preferably, after the washing and rinsing processes, the washing water and the rinsing water both flow into the flocculation container, and the wall of the flocculation container is cleaned by the cleaning hairy balls.

After the washing and rinsing processes, the washing water and the rinsing water flow into the flocculation container for flocculation treatment, and the wall of the flocculation container is cleaned by the cleaning hairy balls through friction in the process of flocculation treatment, so that the purpose of cleaning the wall of the flocculation container is realized. Besides, after the rinsing process, the flocculation container can be flushed by the drained rinsing water, the cleaning hairy balls are stirred in the flushing process so as to clean the inner wall of the flocculation container, and residual flocculates are drained out along with the rinsing water, so that the purpose of effectively removing the flocculates in the flocculation container is realized.

### Embodiment III

In this embodiment, at least one discharge outlet is formed in the flocculation container 1, so as to allow water in the flocculation container 1 to flow out through the discharge outlet. The blocking structure is arranged at the discharge outlet, and/or a diameter of the discharge outlet is less than a diameter D of the cleaning hairy ball 9, so as to prevent the cleaning hairy ball 9 from flowing out from the flocculation container 1 along with the drained water.

As shown in Fig. 3, in this embodiment, the discharge outlet comprises a sewage outlet and a water return opening, wherein the sewage outlet is formed in the very bottom of the flocculation container 1 and communicates with the outside of the washing machine, and the water return opening is formed close to the bottom of the flocculation container 1 and allows clean water to reflow into the outer barrel 10 of the washing machine.

In this embodiment, the blocking structure can be a plurality of convex ribs radially extending along the discharge outlet, and the convex ribs are distributed in a cross manner to form a grid structure 18, and the space between the convex ribs is less than a diameters D of the cleaning hairy balls 9. Or, the blocking structure can also be filtering screens 17 covering the discharge outlet, and diameters of the filtering screens 17 are less than diameters D of the cleaning hairy balls 9.

Preferably, the spaces between the convex ribs at the discharge outlet jointly form a gap in a crossed shape or in a shape like a Chinese character "mi", or the filtering holes of the filtering screens are crossed through holes or through holes in a shape like a Chinese character "mi", so as to prevent that threads are clamped at the discharge outlet and the discharge outlet is blocked.

### Embodiment IV

As shown in Fig. 1 and Fig. 2, in this embodiment, the washing machine further comprises an outer barrel 10 and an inner drum 11 mounted in the outer barrel 10, wherein at least one cleaning hairy ball 9 is arranged in a space between the inner drum 11 and the outer barrel 10.

In this embodiment, a water outlet 16 for feeding washing water to the flocculation container 1 is formed in the lower part of the outer barrel 10, a blocking structure is arranged at the water outlet 16, and/or a diameter of the water outlet 16 is less than a diameter of the cleaning hairy balls 9, so as to prevent the cleaning hairy balls 9 from flowing out of the outer barrel 10 along with the water flow. Preferably, as shown in Fig. 2, the blocking structure arranged at the water outlet of the outer barrel 10 is the filtering screen 17 covering the water outlet.

In this embodiment, a drain opening for allowing water to be drained to the outside of the washing machine can also be formed in the bottom of the outer barrel, and the drain opening communicates with the outside of the washing machine through a conduit provided with a drain pump, so that water is drained out after washing. The filtering screen 17 for preventing the cleaning hairy balls 9 from flowing out is also arranged at the drain opening.

In this embodiment, when the washing machine executes a washing or rinsing program, the inner drum starts rotating so as to stir washing water in the outer barrel, and the cleaning hairy balls move between the inner drum and the outer barrel along with the washing water flow, so that dirt attached between the inner drum and the outer barrel are removed. Therefore, dirt attached to the outer wall of the inner drum and the inner wall of the outer barrel can be removed through friction by the cleaning hairy balls moving along with the washing water flow, and the purpose of self-cleaning of the inner drum and the outer barrel of the washing machine is realized.

As shown in Fig. 2, in this embodiment, a plurality of kinds of cleaning hairy balls 9 with different sizes and specifications are arranged in the space between the inner drum 11 and the outer barrel 10 And preferably, the cleaning hairy balls 9 with at least two specifications and sizes are provided, a diameter D of one kind of cleaning hairy balls 9 is greater than the width of the space between the inner drum and the outer barrel, and a diameter D of the other kind of cleaning hairy balls 9 is less than the width of the space between the inner drum and the outer barrel. Therefore, any position of the space between the inner drum and the outer barrel can be cleaned by the cleaning hairy balls through friction, and the purpose of cleaning the space between the inner drum and the outer barrel without dead corners is realized.

### Embodiment V

As shown in Fig. 1 and Fig. 3, in this embodiment, a water inlet, a water return opening and a sewage outlet are formed in the flocculation container 1. The water outlet of the outer barrel communicates with the water inlet of the flocculation container 1 through a conduit provided with a first water pump 2, and the water return opening of the flocculation container 1 communicates with the water inlet of the outer barrel through a conduit provided with a second water pump 3, so that a controllable circulation loop for washing water between the outer barrel and the flocculation container 1 is formed. The sewage outlet13 of the flocculation container 1 communicates with the outside of the washing machine through a conduit provided with a drain valve 4.

In this embodiment, the water inlet of the flocculation container consists of a spray nozzle 7. The spray nozzle 7 is arranged at the top end of the flocculation container 1, and a plurality of water spraying holes are formed in the spray nozzle 7 arranged around the axis of the spray nozzle 7. Therefore, the intake water flow can be uniformly sprayed to various parts of the side wall of the flocculation container under the action of the spray nozzle, and the flocculates attached to the side wall of the flocculation container can be flushed; besides, the spray water sprayed from the spray nozzle can also be used to flush the cleaning hairy balls 9, so as to prevent flocculates from being remained on the surfaces of the cleaning hairy balls.

## Claims

1. A washing machine, comprising
a flocculation container (1) for performing flocculation treatment on washing water; and
a stirring mechanism arranged in the flocculation container (1);
**characterized in that,**
at least one cleaning hairy ball (9) is arranged in the flocculation container (1), and
the stirring mechanism is configured to stir water in the flocculation container (1) so that the cleaning hairy ball (9) moves along with water flow at least in a process of cleaning the flocculation container (1) so as to remove flocculates attached to the flocculation container (1);
wherein the cleaning hairy ball (9) is provided with a plurality of strip-shaped cleaning hairs (15), wherein a space is formed between every two adjacent cleaning hairs (15) arranged on the cleaning hairy ball (9) and said cleaning hairs (15) are made of a flexible material configured to deform and recover from deformation; first ends of said cleaning hairs (15) being fixed to form a center of the cleaning hairy ball (9), and second ends of said cleaning hairs (15) forming an outer contour surface of the cleaning hairy ball (9) by extending cleaning hairs (15) in a diverging way, so that the center of the cleaning hairy ball (9) is formed by the cleaning hairs (15).

2. The washing machine according to claim 1, **characterized in that** the flocculation container (1) is provided at least one discharge outlet for allowing water in the flocculation container (1) to flow out; a blocking structure is arranged at the discharge outlet, and/or a diameter of the discharge outlet is less than a diameter of the cleaning hairy ball (9), so as to prevent the cleaning hairy ball (9) from flowing out of the flocculation container (1) along with water.

3. The washing machine according to claim 2, further comprising an outer barrel (10) and an inner barrel (11) mounted in the outer barrel (10), wherein at least one cleaning hairy (9) ball is arranged in a space between the inner barrel (11) and the outer barrel (10).

4. The washing machine according to claim 3, **characterized in that** a water outlet for feeding flocculation water to the flocculation container (1) is formed in a lower part of the outer barrel (10), and the blocking structure is arranged at the water outlet, and/or a diameter of the water outlet is less than the diameter of the cleaning hairy ball (9), so as to prevent the cleaning hairy ball (9) from flowing out of the outer barrel (10) along with water.

5. The washing machine according to claim 1 or2, **characterized in that** at least two kinds of cleaning hairy balls (9) with different sizes are respectively arranged in the flocculation container (1) and/or an outer barrel (10) of the washing machine, and densities of all cleaning hairy balls (9) are all less than that of water.

6. The washing machine according to any one of claims from 1 to 5, **characterized in that** lengths of the cleaning hairs (15) arranged on the cleaning hairy ball (9) are equal; or
at least two kinds of cleaning hairs (15) with different lengths are arranged on the cleaning hairy ball (9) in a staggered manner.

7. A control method for the washing machine according to any one of claims 1 to 6, comprising,
feeding water to the flocculation container (1), starting the stirring mechanism, and allowing the cleaning hairy ball (9) to move along with water flow so as to clean flocculates attached to the flocculation container (1).

8. The control method according to claim 7, **characterized in that** the inner barrel (11) of the washing machine starts rotating to stir washing water in the outer barrel (10), and the cleaning hairy ball moves (9) between the inner barrel (11) and the outer barrel (10) along with washing water flow so as to clean dirt attached between the inner barrel (11) and the outer barrel (10).

## Patentansprüche

1. Waschmaschine, die umfasst:
einen Ausflockungsbehälter (1) zum Durchführen einer Ausflockungsbehandlung an Waschwasser; und
einen Rührmechanismus, der in dem Ausflockungsbehälter (1) angeordnet ist;
**dadurch gekennzeichnet, dass**
mindestens ein Reinigungshaarball (9) in dem Ausflockungsbehälter (1) angeordnet ist, und
der Rührmechanismus dazu ausgelegt ist, Wasser in dem Ausflockungsbehälter (1) umzurühren, so dass sich der Reinigungshaarball (9) zusammen mit der Wasserströmung zumindest in einem Prozess zum Reinigen des Ausflockungsbehälters (1) bewegt, um Ausflockungen zu entfernen, die an dem Ausflockungsbehälter (1) haften;
wobei der Reinigungshaarball (9) mit einer Vielzahl von streifenförmigen Reinigungshaaren (15) versehen ist, wobei ein Raum zwischen jeden zweiten benachbarten Reinigungshaaren (15) ausgebildet ist, die an dem Reinigungshaarball (9) angeordnet sind, und die Reinigungshaare (15) aus einem flexiblen Material bestehen, das dazu ausgelegt ist, sich zu verformen und aus der Verformung zurückzukehren; wobei erste Enden der Reinigungshaare (15) fixiert sind, um eine Mitte des Reinigungshaarballs (9) zu bilden, und zweite Enden der Reinigungshaare (15) eine Außenkonturfläche des Reinigungshaarballs (9) durch Verlängern der Reinigungshaare (15) in auseinanderlaufender Weise bilden, so dass die Mitte des Reinigungshaarballs (9) von den Reinigungshaaren (15) gebildet wird.

2. Waschmaschine nach Anspruch 1, **dadurch gekennzeichnet, dass** der Ausflockungsbehälter (1) mit mindestens einer Auslassöffnung versehen ist, so dass Wasser in dem Ausflockungsbehälter (1) hinausfließen kann; eine Blockierungsstruktur an der Auslassöffnung angeordnet ist und/oder ein Durchmesser der Auslassöffnung kleiner als ein Durchmesser des Reinigungshaarballs (9) ist, um zu verhindern, dass der Reinigungshaarball (9) zusammen mit dem Wasser aus dem Ausflockungsbehälter (1) hinausfließt.

3. Waschmaschine nach Anspruch 2, des Weiteren umfassend eine äußere Trommel (10) und eine innere Trommel (11), die in der äußeren Trommel (10) montiert ist, wobei mindestens ein Reinigungshaarball (9) in einem Raum zwischen der inneren Trommel (11) und der äußeren Trommel (10) angeordnet ist.

4. Waschmaschine nach Anspruch 3, **dadurch gekennzeichnet, dass** ein Wasserauslass zum Leiten von Ausflockungswasser in den Ausflockungsbehälter (1) in einem unteren Teil der äußeren Trommel (10) ausgebildet ist, und die Blockierungsstruktur an dem Wasserauslass angeordnet ist und/oder ein Durchmesser des Wasserauslasses kleiner als der Durchmesser des Reinigungshaarballs (9) ist, um zu verhindern, dass der Reinigungshaarball (9) zusammen mit dem Wasser aus der äußeren Trommel (10) hinausfließt.

5. Waschmaschine nach Anspruch 1 oder 2, **dadurch gekennzeichnet, dass** mindestens zwei Arten von Reinigungshaarbällen (9) mit unterschiedlichen Größen jeweils in dem Ausflockungsbehälter (1) und/oder einer äußeren Trommel (10) der Waschmaschine angeordnet sind, und die Dichten aller Reinigungshaarbälle (9) geringer als die von Wasser sind.

6. Waschmaschine nach einem der Ansprüche 1 bis 5, **dadurch gekennzeichnet, dass** die Längen der Reinigungshaare (15), die an dem Reinigungshaarball (9) angeordnet sind, gleich sind; oder
mindestens zwei Arten von Reinigungshaaren (15) mit unterschiedlichen Längen an dem Reinigungshaarball (9) in zueinander versetzter Weise angeordnet sind.

7. Steuerverfahren für die Waschmaschine nach einem der Ansprüche 1 bis 6, umfassend
Leiten von Wasser in den Ausflockungsbehälter (1), Starten des Rührmechanismus und Ermöglichen, dass sich der Reinigungshaarball (9) zusammen mit der Wasserströmung bewegt, um Ausflockungen zu reinigen, die an dem Ausflockungsbehälter (1) haften.

8. Steuerverfahren nach Anspruch 7, **dadurch gekennzeichnet, dass** die innere Trommel (11) der Waschmaschine mit der Umdrehung beginnt, um Waschwasser in der äußeren Trommel (10) umzurühren, und sich der Reinigungshaarball (9) zwischen der inneren Trommel (11) und der äußeren Trommel (10) zusammen mit dem Waschwasser bewegt, um Schmutz zu reinigen, der zwischen der inneren Trommel (11) und der äußeren Trommel (10) haftet.

## Revendications

1. Machine à laver, comprenant un récipient de floculation (1) permettant d'effectuer un traitement de floculation sur l'eau de lavage ; et
un mécanisme d'agitation disposé dans le récipient de floculation (1) ;
**caractérisée en ce qu'**au moins une boule poilue de nettoyage (9) est disposée dans le récipient de floculation (1), et le mécanisme d'agitation est conçu pour agiter l'eau dans le récipient de floculation (1) de sorte que la boule poilue de nettoyage (9) se déplace conjointement avec un écoulement d'eau au moins dans un processus de nettoyage du récipient de floculation (1) de manière à éliminer les floculats fixés au récipient de floculation (1) ;
dans laquelle la boule poilue de nettoyage (9) est pourvue d'une pluralité de poils de nettoyage (15) en forme de bande, dans laquelle un espace est formé entre tous les deux poils de nettoyage (15) adjacents disposés sur la boule poilue de nettoyage (9) et lesdits poils de nettoyage (15) sont constitués d'un matériau flexible conçu pour se déformer et se remettre de la déformation ;
les premières extrémités desdits poils de nettoyage (15) étant fixées pour former un centre de la boule poilue de nettoyage (9), et les secondes extrémités desdits poils de nettoyage (15) formant une surface de contour extérieure de la boule poilue de nettoyage (9) par l'extension des poils de nettoyage (15) de manière divergente, de sorte que le centre de la boule poilue de nettoyage (9) soit formé par les poils de nettoyage (15).

2. Machine à laver selon la revendication 1, **caractérisée en ce que** le récipient de floculation (1) est pourvu d'au moins une sortie d'évacuation pour permettre à l'eau dans le récipient de floculation (1) de s'écouler ; une structure de blocage est disposée à la sortie d'évacuation, et/ou un diamètre de la sortie d'évacuation est inférieur à un diamètre de la boule poilue de nettoyage (9), de manière à empêcher la boule poilue de nettoyage (9) de s'écouler hors du récipient de floculation (1) conjointement avec l'eau.

3. Machine à laver selon la revendication 2, comprenant en outre un fût extérieur (10) et un cylindre intérieur (11) monté dans le fût extérieur (10), dans laquelle au moins une boule poilue de nettoyage (9) est disposée dans un espace entre le cylindre intérieur (11) et le cylindre extérieur (10).

4. Machine à laver selon la revendication 3, **caractérisée en ce qu'**une sortie d'eau destinée à alimenter en eau de floculation le récipient de floculation (1) est formée dans une partie inférieure du cylindre extérieur (10), et la structure de blocage est disposée au niveau de la sortie d'eau, et/ou un diamètre de la sortie d'eau est inférieur au diamètre de la boule poilue de nettoyage (9), de manière à empêcher la boule poilue de nettoyage (9) de s'écouler hors du cylindre extérieur (10) conjointement avec l'eau.

5. Machine à laver selon la revendication 1 ou 2, **caractérisée en ce qu'**au moins deux types de boules poilues de nettoyage (9) de tailles différentes sont respectivement disposées dans le récipient de floculation (1) et/ou un cylindre extérieur (10) de la machine à laver, et **en ce que** les densités de toutes les boules de nettoyage (9) sont toutes inférieures à celles de l'eau.

6. Machine à laver selon l'une quelconque des revendications 1 à 5, **caractérisée en ce que** les longueurs des poils de nettoyage (15) disposés sur la boule poilue de nettoyage (9) sont égales ; ou
**en ce qu'**au moins deux types de poils de nettoyage (15) de longueurs différentes sont disposés sur la boule poilue de nettoyage (9) de manière échelonnée.

7. Procédé de commande de la machine à laver selon l'une quelconque des revendications 1 à 6, comprenant
l'alimentation en eau du récipient de floculation (1), le démarrage du mécanisme d'agitation et le déplacement de la boule poilue de nettoyage (9) conjointement avec l'écoulement d'eau, de manière à nettoyer les floculats fixés au récipient de floculation (1).

8. Procédé de commande selon la revendication 7, **caractérisé en ce que** le cylindre intérieur (11) de la machine à laver commence à tourner pour agiter l'eau de lavage dans le cylindre extérieur (10), et la boule poilue de nettoyage (9) se déplace entre le cylindre intérieur (11) et le cylindre extérieur (10) conjointement avec l'écoulement d'eau de lavage, de manière à nettoyer les salissures fixées entre le cylindre intérieur (11) et le cylindre extérieur (10).
